# EUROPÄISCHE PATENTSCHRIFT

(11) **EP 0 711 221 B1**
(45) Veröffentlichungstag und Bekanntmachung des Hinweises auf die Patenterteilung: **26.02.1997**
(21) Anmeldenummer: 94921654.3
(22) Anmeldetag: 18.07.1994
(51) Int. Cl.: B29B 17/02, B29B 13/10, B02C 4/02, B02C 23/12

(54) **VERFAHREN ZUM PULVERISIEREN VON POLYURETHAN-, POLYHARNSTOFF- UND/ODER POLYURETHAN-POLYHARNSTOFF-WERKSTOFFEN AUF EINER WALZENANLAGE**
PROCESS FOR POWDERING POLYURETHANE, POLYCARBAMIDE AND/OR POLYURETHANE-POLYCARBAMIDE MATERIALS IN A ROLLING MILL
PROCEDE DE PULVERISATION DE POLYURETHANNE, POLYUREE ET/OU POLYURETHANNE-POLYUREE DANS UN DISPOSITIF A CYLINDRES

(30) Priorität: 30.07.1993 DE 4325654; 13.05.1994 DE 4416749
(43) Veröffentlichungstag der Anmeldung: 15.05.1996
(73) Patentinhaber: BAYER AG, 51368 Leverkusen (DE)
(72) Erfinder: WAGNER, Joachim, D-51061 Köln (DE); PELTZER, Karl, D-42799 Leichlingen (DE); WIRTH, Jürgen, D-51147 Köln (DE)
(74) Vertreter: Drope, Rüdiger, Dr.
(86) Internationale Anmeldenummer: EP9402360
(87) Internationale Veröffentlichungsnummer: WO9503926

(56) Entgegenhaltungen:
- EP-A- 0 249 276
- EP-A- 0 573 038
- EP-A- 0 603 646
- DE-A- 4 207 972
- US-A- 4 684 070

## Beschreibung

Die Erfindung betrifft ein Verfahren zum Pulverisieren von Polyurethan-, Polyharnstoff- und/oder Polyurethan-Polyharnstoff-Werkstoffen auf einer Walzenanlage, deren mindestens zwei Walzen mit unterschiedlicher Umfangsgeschwindigkeit rotieren, wobei das Mahlgut dem von den Walzen gebildeten Walzenspalt zugeführt wird und nach dessen Passieren in einen Grobanteil und einen Feinanteil getrennt wird, wobei der Grobanteil wieder dem Walzenspalt und der Feinanteil einer Weiterverarbeitung zugeführt werden.

Die Wiederverwertung von Kunststoffen hat in den letzten Jahren einen sehr großen Stellenwert erhalten. Auch für vernetzte Polyurethane, wie sie beispielsweise für hochbeanspruchte Kraftfahrzeugstoßfänger Verwendung finden, hat man nach Möglichkeiten gesucht, sie einem Materialrecycling zuzuführen. Für ihre Wiederverwertung ist es meist notwendig, diese Altmaterialien zu zerkleinern, insbesondere zu mahlen, um sie in Pulverform, insbesondere als Füllstoff, wiederverwerten zu können. Es bedarf einer besonders feinen Pulverisierung, wenn man sie als Füllstoffe den Rezepturen von Polyurethan-Reaktivsystemen zusetzen möchte. Es ist bekannt (DE 42 07 972 A1), Walzenmühlen zu verwenden. Die Mahlung führt zu einem Gemisch aus sehr vielen sehr groben und wenigen bereits feinen Partikeln. Man siebt die groben Teilchen ab und führt sie dem Walzenspalt wieder zu. Diese Siebung ist sehr unwirtschaftlich, weil das Sieb mit den vielen sehr großen Partikeln belastet wird und dabei vergleichsweise sehr wenig Feinanteile gewonnen werden.

Es ist Aufgabe der vorliegenden Erfindung, das vorbekannte Verfahren zu verbessern, um eine größere Wirtschaftlichkeit zu erzielen.

Diese Aufgabe wird dadurch gelöst, daß der hinter dem Walzenspalt frei herabfallende Grobanteil aufgefangen und rückgeführt wird, wahrend der als Fell auf der Walze mit der größeren Umfangsgeschwindigkeit haften bleibende Feinanteil vom Grobanteil getrennt abgeführt wird.

Nach dem bekannten Verfahren wurden beide Walzen mit einem Schaber gereinigt, so daß das gesamte gemahlene Gut dem Sieb zugeführt wurde. Nach der Erfindung wird demgegenüber das sich bei der Pulverisierung der oben genannten Werkstoffe auf der schneller drehenden Walze bildende Fell aus Feinanteilen dahingehend genutzt, daß man dieses Fell den frei herabfallenden Grobanteilen nicht mehr zuführt, sondern getrennt abführt.

Selbstverständlich enthält das Fell auch noch gröbere Anteile, jedoch ist das Korngrößenspektrum sehr günstig weit zur feineren Seite hin verschoben.

Für viele Weiterverwertungsmöglichkeiten kann deshalb der Feinanteil direkt weiterverwendet werden. Benötigt man jedoch ein besonders feines Pulver, dann wird das aus dem Feinanteil bestehende Fell vorzugsweise nochmals in grobe und feine Partikel klassifiziert Hierzu kann man sich der bekannten Siebungsmethoden bedienen. Bei der Siebung in dieser Verfahrensstufe ist der Feinanteil wesentlich höher und kann sogar den Grobanteil bereits übertreffen. Hat man für die bereits relativ kleinen groben Partikel eine direkte Verwertungsmöglichkeit, wird man sie abführen; anderenfalls wird man sie wieder dem Walzenspalt zur erneuten Mahlung aufgeben.

Es versteht sich, daß das Fell auch abgestreift und einem weiteren Walzenspalt zugeführt werden kann.

Eine besonders vorteilhafte Variante besteht darin, daß das auf der Walze haftende Fell mittels dieser Walze direkt einem zwischen dieser Walze und einer dritten Walze gebildeten Walzenspalt zugeführt wird.

Da diese dritte Walze aber so angeordnet werden muß, daß sie nach oben dreht, kann hier nicht - wie bei dem ersten Walzenspalt - der Grobanteil durch freien Fall separiert werden. Wenn man also nach dem Durchgang durch den zweiten Walzenspalt nochmals grobe Partikel absondern will, so muß man sie absieben.

Vorzugsweise wird der zurückzuführende Grobanteil gekühlt.

Beim Zerkleinern entsteht nämlich erhebliche Reibung und damit Warmeentwicklung. Da dann ein Teil der Partikelchen des Grobanteils mehrmals den Walzenspalt passiert, könnte es ohne Kühlung zu Aufheizungen des Mahlgutes kommen, wodurch dieses geschädigt würde.

Bevorzugt sind die Ausgangsmaterialien zur Durchführung des Verfahrens ein Polyurethan-Weichschaumstoff, ein Polyurethan-Integralschaumstoff oder ein RIM-Werkstoff aus Polyurethan, aus Polyurethan-Polyharnstoff oder aus Polyharnstoff. Diese Materialien zeichnen sich dadurch aus, daß sie beim Mahlen eine besonders ausgeprägte Neigung zur Bildung eines Fells aufweisen. Pulver aus diesen Materialien lassen sich aber auch besonders gut wiederverwerten.

Die nach dem neuen Verfahren hergestellten Pulver lassen sich der konventionellen Thermoplastverarbeitung zuführen und mit den Thermoplasten gemeinsam relativ einfach verarbeiten und dabei blenden. Polyurethane in feinster Pulverform sind bei chemolytischen Verfahren, wie z.B. Glykolyse, Aminolyse und Hydrolyse, vorteilhaft einsetzbar. Auch für das Fließpressen ist die Pulverform vorteilhaft Dies gilt insbesondere dann, wenn als Ausgangsmaterial Pulver aus lackierten RIM-Bauteilen eingesetzt werden. Polyurethane lassen sich als Füllstoffe nur in feinster Pulverform in Polyurethan-Reaktionsgemische zur Weiterverarbeitung einbringen. Das erfindungsgemäß hergestellte Pulver kann auch für thermische Verwertungsverfahren vorteilhaft eingesetzt werden.

Die Herstellung der Polyurethan-, Polyharnstoff- und/oder Polyurethan-Polyharnstoff-Werkstoffe, aus denen später das Pulver zur Wiederverwertung gewonnen wird, erfolgt nach an sich bekannten Methoden der Polyurethanchemie. Es handelt sich dabei um nicht schmelzende, also duromere, Werkstoffe. Aus welchen chemischen Rezepturen diese Werkstoffe gewonnen werden und wie sie dabei zu Gegenstanden verarbeitet werden (Stoßfänger, Armaturenbretter, Seitenschürzen, Spoiler usw. für die KFZ-Industrie, Möbel, Gehäuse usw.), ist unter anderem im Kunststoff-Handbuch, Polyurethane, 2. Auflage, Carl Hanser Verlag München-Wien (1983), beschrieben.

In der Zeichnung ist der Verfahrensablauf in mehreren Durchführungsformen anhand der Darstellung der zugehörigen Mahlanlagen rein schematisch dargestellt und nachstehend näher erläutert:

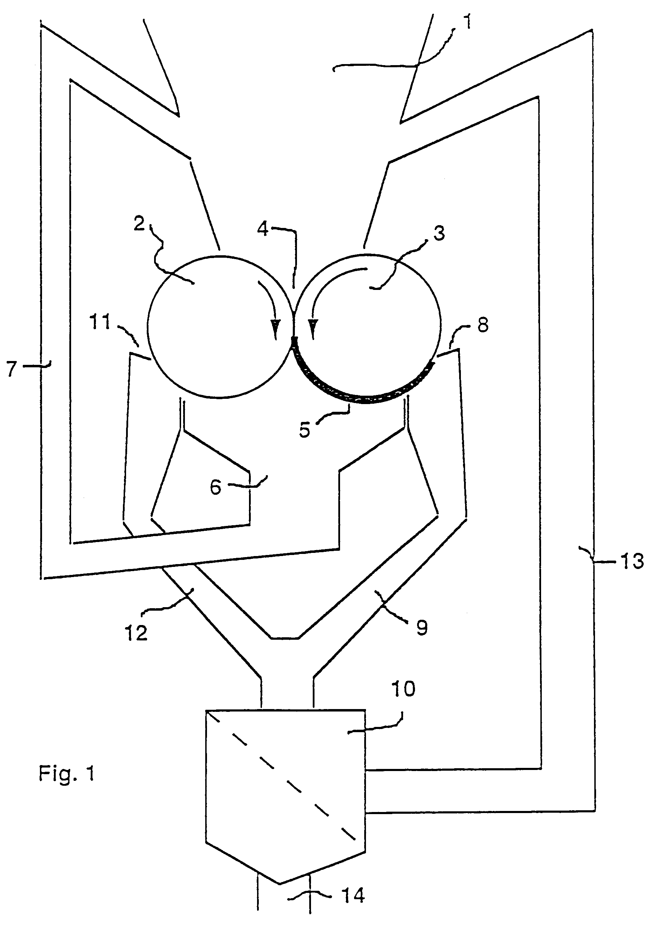

Bei der Durchführung des Verfahrens nach dem Schema gemäß Fig. 1 gelangt auf eine geeignete Größe vorzerkleinertes Altmaterial über einen Aufgabetrichter 1 in einen von zwei Walzen 2, 3 gebildeten Walzenspalt 4. Die Walzen 2, 3 besitzen gleichen Durchmesser; die Walze 3 rotiert jedoch mit größerer Umfangsgeschwindigkeit. Auf der Walze 3 bildet sich ein Fell 5 aus feineren Partikelchen, während der Grobanteil im freien Fall in einen Auffangtrichter 6 fällt und mittels eines Förderers 7, beispielsweise mittels einer Kratzerkette, in den Aufgabetrichter 1 zurückgeführt wird. Das Fell 5 wird von einem Schaber 8 von der Walze 3 abgelöst und es gelangt über eine Rutsche 9 auf eine Siebvorrichtung 10. Die Walze 2 wird ebenfalls mittels eines Schabers 11 von Rückstanden gereinigt, welche durch eine Rutsche 12 ebenfalls in die Siebvorrichtung 10 geführt werden. Der abgesiebte Grobanteil wird über einen Förderer 13 wieder dem Aufgabetrichter 1 zugeführt, während der Feinanteil durch den Auslaß 14 abgeführt und einer Zwischenlagerung oder direkt einer Weiterverarbeitung zugeführt wird. Sind die Partikelchen des aus dem Fell 5 gewonnenen Feinanteils klein genug, kann man auch auf eine Absiebung verzichten und sie direkt weiterverarbeiten. In diesem Falle erübrigen sich die Siebvorichtung 10 und der Förderer 13.

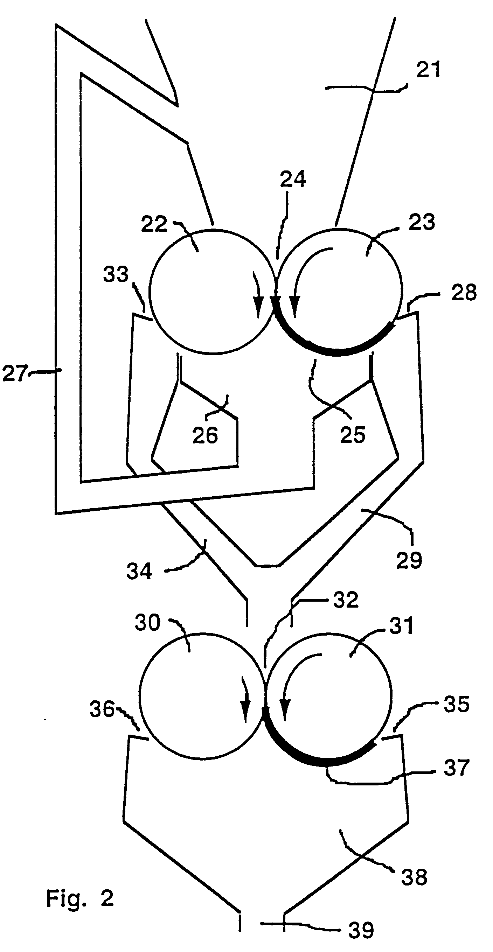

Bei der Durchführung des Verfahrens nach dem Schema gemaß Fig. 2 gelangt das auf eine geeignete Größe vorzerkleinerte Altmaterial über einen Aufgabetrichter 21 in einen von zwei Walzen 22, 23 gebildeten Walzenspalt 24. Die Walzen 22, 23 besitzen gleichen Durchmesser; die Walze 23 rotiert jedoch schneller. Auf ihr bildet sich ein Fell 25 aus feinen Partikelchen, während die groben Partikel im freien Fall in einen darunter angeordneten Auffangtrichter 26 fallen und mittels eines Förderers 27 in den Aufgabetrichter 21 zurückgeführt werden. Das Fell 25 wird mit einem Schaber 28 von der Walze 23 abgelöst und gelangt über eine Rutsche 29 zu einem zweiten, von zwei Walzen 30,31 gebildeten Walzenspalt 32, von denen die Walze 31 schneller rotiert. Der Walze 22 ist ebenfalls ein Schaber 33 zugeordnet, welcher Rückstände abschabt, die über eine Rutsche 34 ebenfalls dem Walzenspalt 32 Zugeführt werden. Nach dem Durchgang durch den Walzenspalt 32 kann das Mahlgut einer Weiterverarbeitung zugeführt werden.

Selbstverständlich kann auch beim zweiten Walzenpaar 30, 31 - genau wie nach dem ersten Walzenpaar 22, 23 - das Mahlgut in Grobanteil und Feinanteil getrennt werden. Schaber 35, 36 befreien die Walzen 30, 31 von Rückständen bzw. von einem Fell 37. Das Mahlgut wird in einem Trichter 38 aufgefangen und durch einen Auslaß 39 abgezogen. Dabei ist eine Rückführung des Grobanteils zum Walzenspalt 32 oder zum Walzenspalt 24 möglich, vorausgesetzt, die Mahlanlage ist mit den hierfür notwendigen Förderern ausgerüstet.

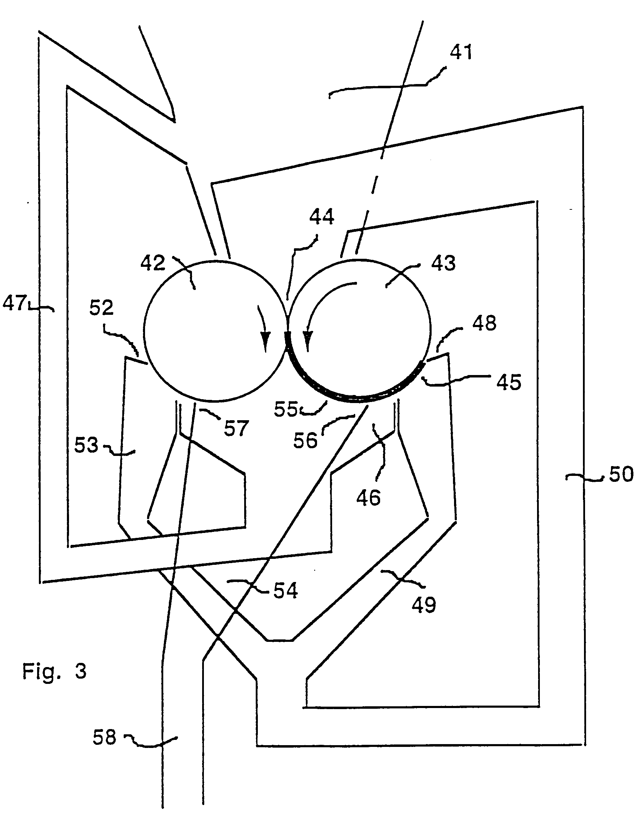

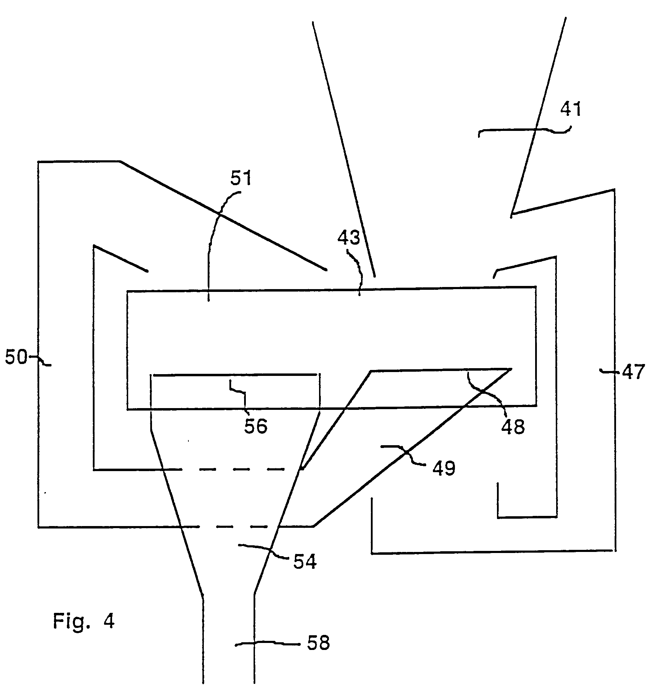

Für die Durchführung einer dritten Variante des Verfahrens zeigt die Fig. 3 eine Mahlanlage in der Stirnansicht und Fig. 4 in der Seitenansicht. Der Unterschied zur Mahlanlage gemäß Fig. 2 besteht im wesentlichen darin, daß anstelle eines zweiten Walzenpaares unterhalb eines Aufgabetrichters 41 nur ein Walzenpaar 42, 43 benutzt wird, welches jedoch langer ist Das auf geeignete Größe vorzerkleinerte Mahlgut passiert einen Walzenspalt 44. Dabei bildet sich auf der schneller drehenden Walze 43 ein Fell 45 aus Feinanteilen, während der Grobanteil im freien Fall in einen Aufgabetrichter 46 fällt und von einem Förderer 47 zum Aufgabetrichter 41 zurückgeführt wird. Das Fell 45 wird mittels eines Schabers 48 von der schneller drehenden Walze 43 abgelöst und über eine Rutsche 49 und einen Förderer 50 einem zweiten, außerhalb des Bereiches des Aufgabetrichters 41 liegenden Bereich 51 (Fig. 4) zugeführt Von der Walze 42 werden die Rückstände ebenfalls mittels eines Schabers 52 entfernt und gelangen über Rutsche 53 ebenfalls in den Förderer 50. Nach Passieren des Walzenspaltes 44 im Bereich 51 fällt der Grobanteil in eine Rutsche 54. Der im Bereich 51 an der Walze 42 haftende Rückstand und das auf der Walze 43 befindliche Fell 55 werden von Schabern 56, 57 entfernt und zusammen über die Rutsche 54 einem Auslaß 58 zugeführt

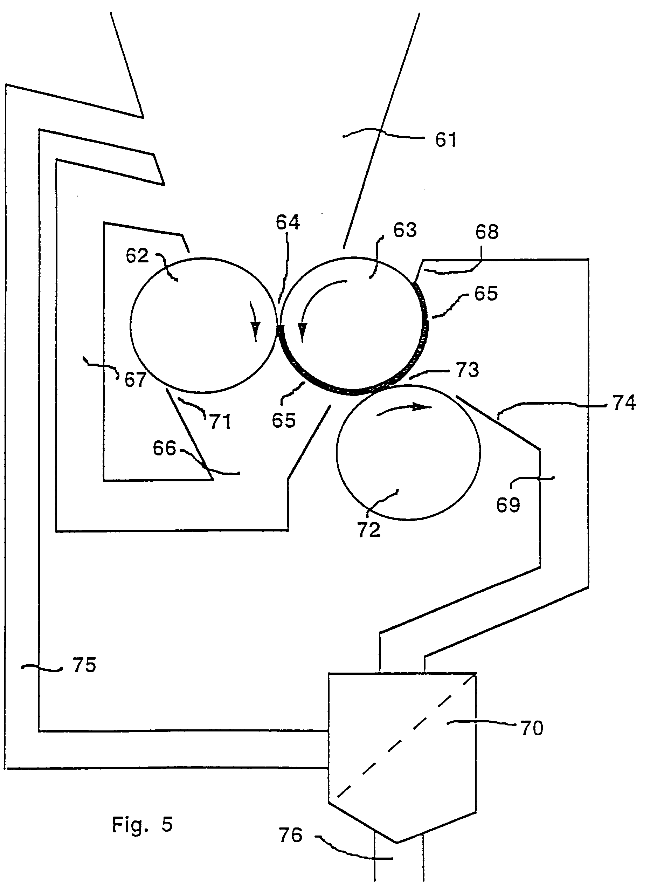

Bei der Durchführung des Verfahrens nach dem Schema gemäß Fig. 5 gelangt auf eine geeignete Größe vorzerkleinertes Altmaterial über einen Aufgabetrichter 61 in einen von zwei Walzen 62, 63 gebildeten Walzenspalt 64. Die Walzen 62, 63 besitzen gleichen Durchmesser; die Walze 63 rotiert jedoch mit größerer Umfangsgeschwindigkeit. Auf der Walze 63 bildet sich ein Fell 65 aus feinen Partikelchen, während der Grobanteil im freien Fall in einen darunter angeordneten Auffangtrichter 66 fällt und mittels eines Förderers 67, beispielsweise einer Kratzerkette, in den Aufgabetrichter 61 zurückgeführt wird. Die Walze 63 bildet mit einer langsamer drehenden Walze 72 einen zweiten Walzenspalt 73, durch welchen das Fell 65 hindurchgeführt wird. Ein Schaber 74 streift die Rückstände von der Walze 72. Ein Schaber 68 streift das Fell 65 von der Walze 63 ab und es gelangt über eine Rutsche 69 zu einer Siebvorrichtung 70. Der abgesiebte Grobanteil wird über einen Förderer 75 dem Aufgabetrichter 61 zugeführt; der Feinanteil wird über den Auslaß 76 abgezogen. Die Walze 62 wird durch den Schaber 71 von Rückständen gesäubert, welche mit dem Grobanteil in den Förderer 67 gelangen. Rotiert die Walze 72 schneller als die Walze 63, so wechselt das Fell 65 beim Passieren des Walzenspaltes 73 mindestens zum Teil auf die Walze 72 über.

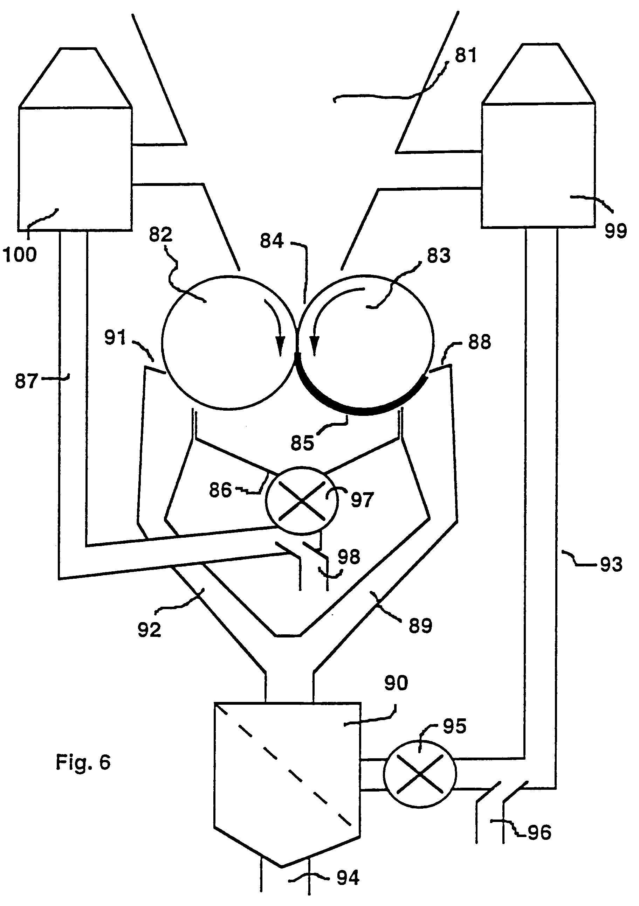

Bei der Durchführung des Verfahrens nach dem Schema gemäß Fig. 6 gelangt auf eine geeignete Größe vorzerkleinertes Altmaterial über einen Aufgabetrichter 81 in eine von zwei Walzen 82, 83 gebildeten Walzenspalt 84. Die Walzen 82, 83 besitzen gleichen Durchmesser; die Walze 83 rotiert jedoch mit größerer Umfangsgeschwindigkeit. Auf der Walze 83 bildet sich ein Fell 85 aus feineren Partikeln, während der Grobanteil im freien Fall in einen Auffangtrichter 86 fällt und über eine Zellenradschleuse 97 mittels aus der Düse 98 kommender Druckluft durch ein Rohr 87 über einen Zyklon 100 in den Aufgabetrichter 81 zurückgeführt wird. Das Fell 85 wird von einem Schaber 88 von der Walze 83 abgelöst und es gelangt über eine Rutsche 89 auf eine Siebvorrichtung 90. Die Walze 82 wird ebenfalls mittels eines Schabers 91 von Rückständen gereinigt' welche durch eine Rutsche 92 ebenfalls in die Siebvorrichtung 90 geführt werden. Der abgesiebte Grobanteil wird über eine Zellradschleuse 95 mittels aus der Düse 96 kommender Druckluft durch ein Rohr 93 über den Zyklon 99 wieder dem Aufgabetrichter 81 zugeführt, während der Feinanteil durch den Auslaß 94 abgeführt und einer Zwischenlagerung oder direkt einer Weiterverarbeitung zugeführt wird. Sind die Partikelchen des aus dem Fell 85 gewonnenen Feinanteils klein genug, kann man auf eine Absiebung verzichten und sie direkt weiterverarbeiten. In diesem Falle erübrigen sich die Siebvorrichtung 90 und die Bestandteile 95, 96, 93 und 99 der Fördereinrichtung. Wird die Materialförderung über gekühlte Druckluft vorgenommen, so kann das Material zusätzlich zu einer Kühlung der Walzen noch gekühlt werden.

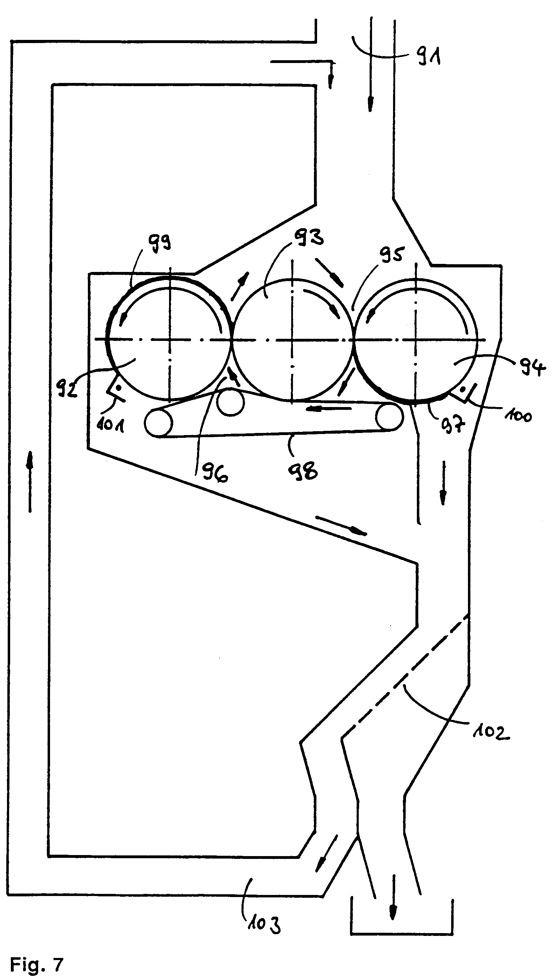

Eine weitere bevorzugte Ausführungsform der Erfindung ist in Fig. 7 dargestellt. Dabei besteht die Walzenmühle aus drei nebeneinanderliegenden Walzen 92, 93 und 94. Die beiden äußeren Walzen 92 und 94 drehen sich schneller als die mittlere Walze 93. Die drei Walzen bilden zwei Walzenspalte 95 und 96. Das zu pulverisierende Material fällt aus dem Aufgabetrichter 91 zunächst in den ersten Walzenspalt 95. Dabei wird ein erstes Fell 97 aus feinteiligem Material auf Walze 94 gebildet. Die Grobanteile fallen auf das Transportband 98 und werden dem zweiten Walzenspalt 96 zugeführt. Dabei wird auf Walze 92 ein zweites Walzenfell 99 gebildet. Verbliebene Grobanteile werden mittels Walze 93 zum ersten Spalt 95 zurückgeführt.

Das Transportband 98 liegt mindestens an der Walze 92 an, so daß zwischen Walze 92 und Transportband 98 kein Austritt von Grobanteilen erfolgt. Die Geschwindigkeit des Transportbandes 98 entspricht der Umfangsgeschwindigkeit der langsamen Walze 93.

Die Felle 97 und 99 werden mittels Abstreifern 100 und 101 von den Walzen abgenommen und auf das Sieb 102 geleitet, wo feinteiliges Pulver vom Überkorn getrennt wird. Das Überkorn wird durch den Kanal 103 zum Walzenspalt 95 zurückgeführt.

### Beispiel

Herstellung eines Pulvers aus geschäumtem Polyisocyanat-Polyadditionsprodukt:
a) Herstellung der Komponente A
   - 60 Gew.-Teile: eines trifunktionellen Polyethers, Molgewicht 6000, hergestellt durch Addition von insgesamt 87 % PO und 13 % EO auf TMP,
   - 40 Gew.-Teile: eines gefüllten Polyethers, Molgewicht 6000, hergestellt durch blockweise Addition von 68,75 % PO, 14,58 % EO und 16,66 % TDI-Hydrazin-Polyadditionsprodukt auf TMP,
   - 3,8 Gew.-Teile: Wasser,
   - 0,05 Gew.-Teile: Katalysator 1,
   - 0,25 Gew.-Teile: Katalysator 2,
   - 0,45 Gew.-Teile: Katalysator 3,
   - 0,4 Gew.-Teile: Vernetzer Diethanolamin,
   - 1,0 Gew.-Teile: eines Stabilisators auf Basis Polysiloxan-Polyether-Block-Copolymer
   werden zusammengemischt und homogen verrührt.
b) Herstellung der Komponente B
   TDI 80/20 und PMDI werden im Verhältnis 70:30 homogen vermischt.
c) Herstellung des Polyisocyanat-Polyadditionsproduktes
   105,95 Gew.-Teile der Komponente A werden mit 48,5 Gew.-Teilen der Komponente B zusammengegeben und 5 Sekunden mit einem Laborrührer (Durchmesser des Rührblattes ca. 5 cm) bei 4200 min⁻¹ homogenisiert. Sofort danach wird das Reaktionsgemisch in eine auf 55°C vorgewärmte, mit einem Trennmittel auf Wachsbasis behandelte Form gegeben und die Form geschlossen. Nach 10 Minuten Formstandzeit kann das geschäumte Polyisocyanat-Polyadditionsprodukt entformt werden.
d) Vorzerkleinerung
   Der entformte Formkörper wird auf einer handelsüblichen Schneidmühle, erhältlich z.B. bei Firma Pallmann, Zweibrücken (BRD), Modell PS-4-5, in ca 10 bis 20 mm große Flocken vorzerkleinert und dann in die Walzenmühle gegeben.
e) Pulverisierung
   In dem folgenden Beispiel wurde auf einer Labor-Walzenanlage des Typs SK 6612 der Firma Berstorff, Hannover (BRD), gearbeitet, wie sie in Fig. 1 dargestellt ist. Diese Maschine besitzt zwei unabhängig in der Drehzahl im Bereich von 7 bis 31,5 min⁻¹ steuerbare, festgelagerte Walzen des Umfanges 62 cm und der Länge 45 cm; der Walzenspalt kann bis auf unter 0,1 mm verringert werden. Die Walzen waren während der Mahlvorgänge nicht beheizt.
   Beim Mahlversuch wurden die Drehzahlen 30 min⁻¹ für Walze 3 und 5 min⁻¹ für Walze 2 eingestellt; der Walzenspalt 4 hatte eine Breite von 0,1 mm. Auf die Maschine wurde nach und nach 1 kg des - wie oben beschrieben hergestellten - Produktes gegeben, und direkt unterhalb des Walzenpaares 2, 3 erhält man ca. 900 g grobe Flocken, die direkt aus dem Walzenspalt 4 herausfallen. Diese Flocken haben noch eine Größe zwischen 5 und 10 mm. Räumlich getrennt von diesem Material wurden ca 100 g Pulver mit einem Schaber 8 von der Walze 3 abgenommen und an diesem Pulver eine mittlere Teilchengröße von 200 µm bestimmt.
f) Bestimmung der Teilchengröße
   Die Teilchengröße wurde in einem lichtmikroskopischen Verfahren mit anschließender Übertragung des Bildes in einen Rechner und nachgeschalteter Auswertung der Bilder mit einer Bildauswerte-Software bestimmt. Hierbei wird die Projektionsfläche der Partikel senkrecht zur Beobachtungsrichtung in der Beobachtungsebene gemessen, diese Fläche als Fläche eines Kreises aufgefaßt und dessen Durchmesser berechnet. Dieses Verfahren gibt gute, mit Siebanalysen vergleichbare Resultate bei solchen Teilchen, die in ihrer Form nur wenig von Kugeln abweichen.

Die angegebenen mittleren Partikelgrößen sind diejenigen Partikelgrößen (= Durchmesser der massegleichen Kugel), bei der 50 % aller Teilchen kleiner und 50 % aller Teilchen größer als der angegebene Wert sind.

## Patentansprüche

1. Verfahren zum Pulverisieren von Polyurethan-, Polyharnstoff- und/oder Polyurethan-Polyhamstoff-Werkstoffen auf einer Walzenanlage, deren mindestens zwei Walzen (2, 3; 22, 23; 42, 43; 62, 63) mit unterschiedlicher Umfangsgeschwindigkeit rotieren, wobei vorzerkleinertes Mahlgut dem von den Walzen (2, 3; 22, 23; 42, 43; 62, 63) gebildeten Walzenspalt (4; 24; 44; 64) zugeführt wird und nach dessen Passieren in einen Grobanteil und einen Feinanteil getrennt wird, wobei der Grobanteil wieder dem Walzenspalt (4; 24; 44; 64) und der Feinanteil einer Weiterverarbeitung zugeführt werden, dadurch gekennzeichnet, daß der hinter dem Walzenspalt (2; 24; 44; 64) frei herabfallende Grobanteil aufgefangen und rückgeführt wird, während der als Fell (5; 25; 37; 45; 65) auf der Walze (3; 23; 42; 63) mit der größeren Umfangsgeschwindigkeit haften bleibende Feinanteil getrennt vom Grobanteil abgeführt wird.

2. Verfahren nach Anspruch 1, dadurch gekennzeichnet, daß das aus dem Feinanteil bestehende Fell (5; 25; 37; 45; 65) abgestreift und der Weiterverarbeitung zugeführt wird.

3. Verfahren nach Anspruch 2, dadurch gekennzeichnet, daß der Feinanteil nochmals in grobe und feine Partikel klassifiziert wird und daß die groben Partikel dem Walzenspalt (4; 64) wieder zugeführt werden.

4. Verfahren nach Anspruch 1, dadurch gekennzeichnet, daß das auf der Walze (63) haftende Fell (65) mittels dieser Walze (63) direkt einem zwischen dieser Walze (63) und einer dritten Walze (72) gebildeten Walzenspalt (73) zugeführt wird.

5. Verfahren nach einem der Ansprüche 1 und 3, dadurch gekennzeichnet, daß der zurückzuführende Grobanteil gekühlt wird.

6. Verfahren nach einem der Ansprüche 1 bis 5, dadurch gekennzeichnet, daß das Mahlgut ein Polyurethan-Hartschaumstoff ist.

7. Verfahren nach einem der Ansprüche 1 bis 5, dadurch gekennzeichnet, daß das Mahlgut ein Polyurethan-Weichschaumstoff ist.

8. Verfahren nach einem der Ansprüche 1 bis 5, dadurch gekennzeichnet, daß das Mahlgut ein Polyurethan-Integralschaumstoff ist.

9. Verfahren nach einem der Ansprüche 1 bis 5, dadurch gekennzeichnet, daß das Mahlgut ein RIM-Werkstoff aus Polyurethan, aus Polyurethan-Polyharnstoff oder aus Polyharnstoff ist.

## Claims

1. A process for pulverising polyurethane, polyurea and/or polyurethane/polyurea materials on a roll installation, the at least two rolls (2, 3; 22, 23; 42, 43; 62, 63) of which rotate at different peripheral speeds, wherein pre-comminuted material to be ground is fed to the roll gap (4; 24; 44; 64) formed by the rolls (2, 3; 22, 23; 42, 43; 62, 63) and after passing through the roll gap is separated into a coarse fraction and a fine fraction, wherein the coarse fraction is fed to the roll gap (4; 24; 44; 64) again and the fine fraction is fed to a further processing operation, characterised in that the freely falling coarse fraction is caught behind the roll gap (2; 24; 44; 64) and recycled, whilst the fine fraction which remains as skin (5; 25; 37; 45; 65) on the roll (3; 23; 42; 63) with the higher peripheral speed is discharged separately from the coarse fraction.

2. A process according to claim 1, characterised in that the skin (5; 25; 37; 45; 65) consisting of the fine fraction is stripped off and fed to the further processing operation.

3. A process according to claim 2, characterised in that the fine fraction is again classified into coarse and fine particles, and that the coarse particles are fed to the roll gap (4; 64) again.

4. A process according to claim 1, characterised in that the skin (65) adhering to the roll (63) is fed directly, by means of this roll (63), to a roll gap (73) formed between this roll (63) and a third roll (72).

5. A process according to one of claims 1 and 3, characterised in that the coarse fraction to be recycled is cooled.

6. A process according to any one of claims 1 to 5, characterised in that the material to be ground is a polyurethane rigid foamed material.

7. A process according to any one of claims 1 to 5, characterised in that the material to be ground is a polyurethane flexible foamed material.

8. A process according to any one of claims 1 to 5, characterised in that the material to be ground is a polyurethane self-skinning foamed material.

9. A process according to any one of claims 1 to 5, characterised in that the material to be ground is an RIM material made of polyurethane, of polyurethane-polyurea or of polyurea.

## Revendications

1. Procédé de pulvérisation de matériaux à base de polyuréthane, de polyurée et/ou de polyuréthane-polyurée sur une installation à cylindres dont au moins deux cylindres (2, 3 ; 22, 23 ; 42, 43 ; 62, 63) tournent à des vitesses périphériques différentes, dans lequel le produit à broyer préfragmenté est envoyé à l'espacement entre cylindres (4 ; 24 ; 44 ; 64) formé parles cylindres (2, 3 ; 22, 23 ; 42, 43 ; 62, 63) et, après' l'avoir franchi, est séparé en une fraction grossière et en une fraction fine, la fraction grossière étant renvoyée à l'espacement entre cylindres (4 ; 24 ; 44 ; 64) et la fraction fine étant envoyée à un traitement ultérieur, caractérisé en ce que la fraction grossière qui tombe librement derrière l'espacement entre cylindres (2 ; 24 ; 44 ; 64) est recueillie et renvoyée tandis que la fraction fine qui continue à adhérer sous forme de peau (5 ; 25 ; 37 ; 45; 65) sur le cylindre (3 ; 23 ; 42 ; 63) à vitesse périphérique plus élevée est évacuée séparément de la fraction grossière.

2. Procédé selon la revendication 1, caractérisé en ce que la peau (5 ; 25 ; 37 ; 45 ; 65) qui consiste en la fraction fine est détachée par raclage et envoyée au traitement ultérieur.

3. Procédé selon la revendication 2, caractérisé en ce que la fraction fine est séparée encore une fois en particules grossières et en particules fines et en ce que les particules grossières sont renvoyées à l'espacement entre cylindres (4 ; 64).

4. Procédé selon la revendication 1, caractérisé en ce que la peau (65) qui adhère au cylindre (63) est envoyée au moyen de ce cylindre (63) directement à un espacement entre cylindres (73) formé entre ce cylindre (63) et un troisième cylindre (72).

5. Procédé selon l'une des revendications 1 et 3, caractérisé en ce que la fraction grossière qui doit être renvoyée est refroidie.

6. Procédé selon l'une des revendications 1 à 5, caractérisé en ce que le produit à broyer est une mousse dure de polyuréthane.

7. Procédé selon l'une des revendications 1 à 5, caractérisé en ce que le produit à broyer est une mousse molle de polyuréthane.

8. Procédé selon l'une des revendications 1 à 5, caractérisé en ce que le produit à broyer est une mousse intégrale de polyuréthane.

9. Procédé selon l'une des revendications 1 à 5, caractérisé en ce que le produit à broyer est un matériau RIM constitué par du polyuréthane, du polyuréthane-polyurée ou de la polyurée.
